# EUROPÄISCHE PATENTSCHRIFT

(11) **EP 0 964 182 B1**
(45) Veröffentlichungstag und Bekanntmachung des Hinweises auf die Patenterteilung: **23.02.2005**
(21) Anmeldenummer: 99110826.7
(22) Anmeldetag: 05.06.1999
(51) Int. Cl.: F16F 15/00, F16C 25/06, F16C 35/077, F16C 9/03, F16C 27/04, F02F 7/00

(54) **Verfahren und Vorrichtung zur Beeinflussung einer Geräuschkulisse einer rotierende Teile aufweisenden Maschine**
Method and device to influence a noise barrier for the rotating part of a machine
Méthode et dispositif pour influencer une barrière au bruit d'une pièce rotative d'une machine

(30) Priorität: 13.06.1998 DE 19826170
(43) Veröffentlichungstag der Anmeldung: 15.12.1999
(73) Patentinhaber: DaimlerChrysler AG, 70567 Stuttgart (DE)
(72) Erfinder: Schnur, Jürgen, 71254 Ditzingen (DE); Tomaschko, Silvia Dr., 89075 Ulm (DE)

(56) Entgegenhaltungen:
- EP-A- 0 717 208
- GB-A- 864 465
- JP-A- 61 066 544
- US-A- 5 221 146
- US-A- 5 397 183
- US-A- 5 660 481

## Beschreibung

Die Erfindung betrifft ein Verfahren zur Beeinflussung einer Geräuschkulisse einer Maschine und ein Wellenlager gemäß den Oberbegriffen der Ansprüche 1 bzw. 4.

Ein Solches Verfahren bzw. ein solches Wellenlager ist aus der US 5 221 146 A bekannt.

Maschinen mit rotierenden Teile weisen zumindest meistens eine gewisse störende Geräuschkulisse auf. Ein Grund für diese Störgeräusche liegt u.a. daran, daß die rotierenden Drehteile, insbesondere Wellen, Schwingungen in andere Bauteile einleiten. Zur Übertragung von Schwingungen zwischen Bauteilen bzw. zur Einleitung von Schwingungen von einem Bauteil in ein anderes Bauteil sind Resonanzfrequenzen wichtig. Die mathematische Zusammenhang dieser frequenzabhängigen Übertragung wird Übertragungsfunktion genannt.

Aus der US 5,332,061 A1 ist Verfahren zur Unterdrückung von in die Karosserie eingeleiteten Vibrationen und ein entsprechendes Fahrzeug bekannt. Die betreffenden eingeleiteten Vibrationen, die u.a. auch zu hörbar wahrnehmbaren Schwingungen führen, stammen vom Motor und werden an den Verbindungspunkten des Motors mit der Karosserie übertragen. Zu Dämpfung dieser Vibrationen weist das Fahrzeug Shaker, also mechanische Schwingungserreger auf, die im Bereich von zumindest einigen Verbindungspunkten des Motors mit der Karosserie angeordnet sind. Beim Betreiben des Motors werden die Shaker in Abhängigkeit von der Motorendrehzahl bei den Resonsanzfrequenzen gegenphasig zu den vom Motor kommenden Vibrationen erregt, wodurch die Übertragung der eingeleiteten Vibrationen zumindest gedämpft werden. Die entsprechenden Frequenzen und deren Amplituden für die Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, daß die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführend Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu wird je nach Größe des Parameters aus einem Datenfeld bestimmte Daten ausgelesen und unter Zuhilfenahme von Schwingungserregern in u.a. auch körperwahrnehmbaren Sekundär-Schwingungen umgesetzt. Durch diese Maßnahmen können in Verbindung mit der Beeinflussung des akustisch wahrgenommenen Luftschalls sowohl positive als auch negative Interferenzen der künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.

Die Aufgabe der Erfindung ist es, ein Verfahren zu entwickeln, mit dem wahrnehmbare Schwingungen einer rotierende Drehteile aufweisenden Maschine reduziert werden können. Desweiteren ist es Aufgabe der Erfindung, eine Vorrichtung vorzuschlagen, mit der die wahrnehmbaren Schwingungen reduziert werden können.

Die Aufgabe wird erfindungsgemäß mit einem Verfahren gemäß Anspruch 1 und mit einem Wellenlager gemäß Anspruch 4 gelöst.

Die Veränderung der Einspannungsverhältnisse bewirkt bspw., daß die Werte der Eigenschwingungen des Drehteils und auch Übertragungsfunktion vom Drehteil an ein weiteres Bauteil verändert werden. Durch die Veränderung der Übertragungsfunktion ist die Weiterleitung von Schwingungen, also der übertragbaren Energie, die von dem Drehteil kommen, in ein anderes Bauteil verändert, insbesondere zumindest vermindert.

Bei der Radialverstelleinheit erfolgt der Eingriff durch das Anlegen einer elektrischen Spannung. Diese Maßnahme führt zu einer Veränderung der Resonanz- bzw. Eigenfrequenzen des Drehteils und ebenfalls zu einer Veränderung bei der Übertragung bzw. Einleitung von Schwingungen. Zur Übertragung von Schwingungen zwischen Bauteilen bzw. zur Einleitung von Schwingungen von einem Bauteil in ein anderes Bauteil sind die jeweiligen Resonanzfrequenzen wichtig. Der mathematische Zusammenhang dieser frequenzabhängigen Energie- bzw. Schwingungs-Übertragung wird Übertragungsfunktion genannt.

Zusätzlich kann auf die genannte Weise kann bspw. ein Spiel, das sich aufgrund von Temperatureinflüssen verändert, während des Betriebs des Drehteils erfolgen. Sinnvoll ist dies bspw. für einen Spielausgleich.

Dies ist vorzugsweise bei einer Kurbel- und/oder Nockenwelle einer Brennkraftmaschine, vorzugsweise eines Diesel- oder Benzinmotors als Drehteil sinnvoll, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann.

Eine Verwendung dieses Verfahrens bzw. dieser Vorrichtung ist zweckmäßigerweise bei Drehteilen von Elektromotoren wie insbesondere Rotoren aber auch in Flugzeugtriebwerken, bspw. Düsentriebwerken oder Propeller gegeben.

In bevorzugter Weise ist der Einsatz die Erfindung auch bei einer Kurbel- und/oder Nockenwelle einer Brennkraftmaschine, vorzugsweise eines Diesel- oder Benzinmotors als Drehteil zweckmäßig, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann. Vorzugsweise erfolgt hier die Beeinflussung der vom Betreiber eines Fahrzeuges insbesondere als störend wahrnehmbaren und zumindest zum Teil vom Motor kommenden Geräuschpegels am Ort des Entstehens und nicht wie bislang üblich, erst am Ort der Wahrnehmung durch den Betreiber. Hierdurch ist in günstiger Weise u.a. der Aufwand hinsichtlich der Steuerelektronik und des apparativen Aufbaus (Mikrophon, Lautsprecher und dgl.) verringert.

Sinnvolle Ausgestaltungen der Erfindung sind den Unteransprüchen entnehmbar. Im übrigen wird die Erfindung anhand von in den Zeichnungen dargestellten Ausführungsbeispielen näher erläutert. Dabei zeigt
- Fig. 1: ein Wellenlager mit innenseitig angeordneter zweiteiliger Radialverstelleinheit,
- Fig. 2: ein Wellenlager mit innenseitig angeordneter dreiteiliger Radialverstelleinheit,
- Fig. 3: ein Wellenlager mit außenseitig angeordneter einteiliger Radialverstelleinheit,
- Fig. 4: eine Kurbelwelle mit mehreren erfindungsgemäßen Wellenlagern,
- Fig. 5: eine Detailzeichnung eines stirnseitig in einem umgebenden Bauteil 7 gehalterten Drehteils mit stirnseitig angeordneter Radialverstelleinheit,
- Fig. 6: eine Radialverstelleinheit, die in der Art einer Dichtung mit integrierten Piezoelementen ausgeführt ist,
- Fig. 7: eine Radialverstelleinheit, die in der Art einer Dichtung mit integrierten und orientierten Piezoelementen ausgeführt ist und
- Fig. 8: eine Radialverstelleinheit und deren Ausschnittsvergrößerung, wobei die Radialverstelleinheit in der Art einer Dichtung mit integrierten und orientierten Piezoelementen sowie mit integrierten Kontakten ausgeführt ist.

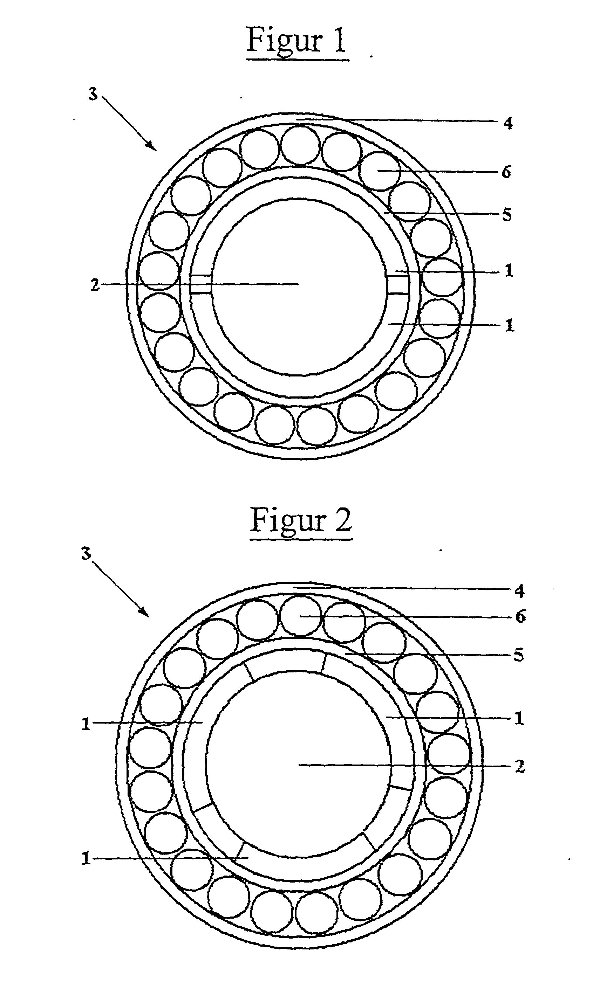

In Figur 1 ist ein Wellenlager 3 in der Art eines Kugelrollenlagers dargestellt, wobei die Erfindung nicht auf Rollenlager beschränkt ist, sondern vielmehr alle möglichen Wellenlager, wie bspw. Rollen-, Wälz- oder Gleitlager und dgl., betrifft. Das Wellenlager nach Figur 1 weist eine Außenschale 4, eine Innenschale 5, eine innenseitig der Innenschale 5 angeordnete Radialverstelleinheit 1 sowie zwischen der Außenschale 4 und der Innenschale 5 rollbar angeordnete Kugeln 6 auf.

Die Radialverstelleinheit 1 wird von zwei als Halbschalen ausgebildete Piezolemente gebildet. Die halbschaligen Piezoelemente der Radialverstelleinheit 1 sind voneinander beabstandet auf der Innenseite der Innenschale 5 angeordnet, so daß sie im Ruhezustand insbesondere spielfrei an der Außenfläche des Drehteils 2 anliegen.

Die halbschaligen Piezoelemente der Radialverstelleinheit 1 werden in günstiger Weise dadurch elektrisch kontaktiert, daß an die Welle auf Masse und die Innenschale 5 des Wellenlagers 3 das entgegengesetzte, vorzugsweise positive Potential angelegt wird. Vorzugsweise wird an das gesamte Wellenlager 3 das positive Potential angelegt, wobei das Wellenlager 3 gegenüber seinem aufnehmenden Bauteil 7 und seiner sonstigem Umgebung elektrisch isoliert sein sollte.

Durch die elektrische Kontaktierung des Wellenlagers 3 können die halbschaligen Piezoelemente der Radialverstelleinheit 1 durch Anlegen einer elektrischen Gleichspannung radial gestreckt werden, wodurch sich der Anpreßdruck an die Welle und damit die zuvor vorliegenden Einspannverhältnisse ändern.

Mir der Änderung der Einspannverhältnisse ist u.a. eine Verstimmung der Eigenschwingungen des Drehteils 2 verbunden. Durch die Veränderung der Geometrie der halbschaligen Piezoelemente der Radialverstelleinheit 1 kann bspw. auch ein ggf. auftretendes Spiel ausgeglichen werden.

Desweiteren können die halbschaligen Piezoelemente der Radialverstelleinheit 1 bei einer im Drehteil 2 auftretenden Schwingung durch das Anlegen einer Wechselspannung zu einer Sekundär-Schwingung erregt werden. Die Sekundär-Schwingung kann mit der auftretenden Schwingung, insbesondere einer Eigenschwingung des Drehteils 2 interferiert werden, wodurch die auftretende Schwingung verändert und insbesondere gedämpft wird.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit entsprechend generierten Datensätzen die halbschaligen Piezoelemente der Radialverstelleinheit 1 zu einer entsprechenden Sekundär-Schwingung zu erregen.

Auf eine aufwendige Aufnahme- und/oder Auswerteelektronik für die auftretenden Schwingung kann in besonderer Weise verzichtet werden, wenn die Datensätze zur Steuerung der Einspannverhältnisse und/oder der Sekundär-Schwingung einem vorzugsweise elektronischen Datenspeicher, in dem zuvor entsprechend exemplarisch ermittelte Datensätze niedergelegt sind, entnommen werden. Insbesondere erfolgt die Entnahme eines jeweiligen Datensatzes in Abhängigkeit eines mit dem Betrieb des Drehteils 2 korrelierten Parameters.

In andere Fällen ist es zweckmäßig, die auftretenden Schwingungen zu ermitteln und die Datensätze für die Sekundär-Schwingung entsprechend der ermittelten Schwingung auszuwählen.

Handelt es sich bei dem Drehteil 2 um ein rotierendes Drehteil, insbesondere um eine Nocken- und/oder Kurbelwelle eines Verbrennungsmotors, ist es sinnvoll, die Einspannverhältnisse und/oder die Sekundär-Schwingungen in Abhängigkeit insbesondere der Drehzahl und/oder des Kurbel- bzw. Nockenwellenwinkels des Verbrennungsmotors zu verändern.

In sinnvoller Weise kann die radiale Verstellung der Radialverstelleinheit 1 und die künstliche Generierung der Sekundär-Schwingung miteinander verbunden werden, wodurch die Vorrichtung bzw. das erfingsgemäße Verfahren flexibler wird.

Die Kombination dieser beiden Verwendungsmöglichkeiten eines erfindungsgemäßen Wellenlagers 3 kann dadurch erfolgen, daß als elektrische Spannung eine Wechselspannung mit einer zusätzlichen Gleichspannung( einer sogenannten Offset-Spannung) verwendet wird.

Die Offset-Spannung regelt die radiale Erstreckung bzw. den radialen Anpreßdruck der halbschaligen Piezoelemente der Radialverstelleinheit 1, während die Wechselspannung die Piezoelemente der Radialverstelleinheit 1 zu der Sekundär-Schwingung erregt. Dadurch führen die halbschaligen Piezoelemente der Radialverstelleinheit 1 eine Sekundär-Schwingung aus, deren Nullpunkt am demjenigen Ort angeordnet ist, der durch die Offset-Spannung festgelegt ist.

Im Falle eines innen- und außenseitig fest eingespannten Wellenlagers 3 kann sich ein Piezoelement der Radialverstelleinheit 1 allenfalls nur gering körperlich ausdehnen, so daß es sich in diesem Fall bei den Sekundär-Schwingungen um Druck-Schwingungen, also um radiale Kraftflüsse handelt, die auf das Drehteil 2 übertragen werden. Hierdurch werden ebenfalls die Einspannverhältnisse des Drehteils 2 verändert.

Des weiteren können die Einspannverhältnisse und/oder die Sekundär-Schwingungen in besonderer Weise auch in Abhängigkeit von der Temperatur des Drehteils 2 und/oder des Wellenlagers 3 verändert werden.

In Figur 2 ist ein weiteres Wellenlager 3 dargestellt, das demjenigen nach Figur 1 ähnlich ist. Der Unterschied zwischen diesen beiden Wellenlagern besteht darin, daß hier die Radialverstelleinheit 1 hier drei kreisschalenförmige Piezoelemente aufweist.

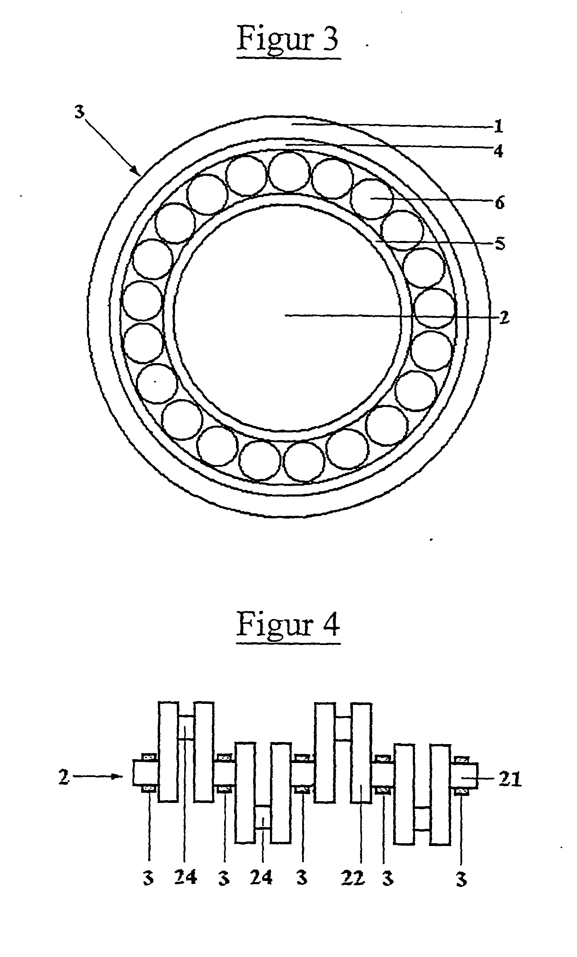

In Figur 3 ist ein weiteres Wellenlager 3 dargestellt. Bei diesem Wellenlager 3 ist die Radialverstelleinheit 1 an der Außenfläche der Außenschale 4 angeordnet und weist ein ringförmiges Piezoelement auf, das ggf. auch eine axial verlaufenden Fuge (nicht eingezeichnet) aufweisen kann.

Das Wellenlager 3 wird an dem Drehteil 2 derart angeordnet, daß seine Symmetrieachse gleichachsig zu der Rotationsachse des Drehteils 2 verläuft. Des weiteren wird das Wellenlager 3 an seinen beiden Außenflächen abgestützt; d.h. die Innenseite der Innenschale 5 liegt an der Außenfläche des Drehteils 2 und die Ringaußenseite der Piezoelemente der Radialverstelleinheit 1 an einem es zumindest bereichsweise umgebenden Bauteil 7 an.

Für die elektrischen Kontaktierung wird die der Außenfläche der Außenschale 4 zugewandte Ringinnenseite des Piezoelements der Radialverstelleinheit 1 auf Masse und die Ringaußenseite des Piezoelements der Radialverstelleinheit 1 an das positive Potential gelegt.

Tritt ein radiales Spiel zwischen dem das Wellenlager 3 umgebenden Bauteil 7 und/oder zwischen dem Wellenlager 3 und dem Drehteil 2 auf, wird eine elektrische Spannung an das Piezoelement der Radialverstelleinheit 1 angelegt. Durch die elektrische (Gleich-) Spannung verändert sich die radiale Erstreckung des Piezoelements der Radialverstelleinheit 1. Dadurch wird das Spiel zumindest verringert. Sinnvollerweise wird die elektrische Spannung so gewählt, daß die Veränderung der radialen Erstreckung dem Maß des Spiel entspricht.

Ist das Wellenlager 3 an seinen beiden achsparallelen Außenflächen spielfrei angelegt, kann sich die radiale Erstreckung des Piezoelements der Radialverstelleinheit 1 allenfalls minimal ändern. In diesem Fall wird der Druck auf das Drehteil 2 und das das Wellenlager 3 umgebende Bauteil 7 erhöht sowie die Einspannverhältnisse geändert.

Weist die elektrische Spannung einen Wechselspannungsanteil auf, so können hierdurch - wie schon zuvor beschrieben - Sekundär-Schwingungen in Form von mit großen Kräften verbundene Druck-Schwingungen auf das Drehteil 2 und auf das das Wellenlager 3 umgebende Bauteil 7 übertragen werden.

In Figur 4 ist als Drehteil 2 eine Kurbelwelle mit daran angeordneten Wellenlagern dargestellt. Die Kurbelwelle weist zwei axial außenseitig angeordnete Hauptlagerzapfen 21 auf. Einem Hauptlagerzapfen 21 folgen in Richtung der Rotationsachse zwei Kurbelwangen 22, zwischen denen ein Lagerzapfen 23 angeordnet ist. Der zweiten Kurbelwange 22 nachfolgend ist ein Pleullagerzapfen 24 angeordnet, der radial zu Rotationsachse der Kurbelwelle versetzt ist. Anschließend folgt wieder eine Kurbelwange 22, ein Lagerzapfen 23, eine Kurbelwange 22, ein Pleullagerzapfen 24 usw.. Die erfindungsgemäßen Wellenlager 3 sind an den Hauptlagerzapfen 21 und an den Lagerzapfen 23 angeordnet. In bevorzugter Weise sind die Wellenlager 3 getrennt voneinander ansteuerbar, wodurch die Variationsmöglichkeiten einer durch die Wellenlager erfolgenden Einflußnahme auf das Drehteil erhöht sind.

Anstelle von Rollenlagern ist es bspw. bei einer Kurbelwelle sinnvoll zumindest an den Lagerzapfen sogenannte Gleitlager zu verwenden. In diesem Fall können hier die Piezoelemente gleich die Gleitlager bilden. Im zweckmäßiger Ausgestaltung können diese als Gleitlager und gleichzeitig als Radialverstelleinheit 1 verwendeten Piezoelemente auf ihrer der Welle zugekehrten Oberfläche eine Gleitschicht aufweisen. Die Gleitschicht wiederum weist sinnvollerweise ein Trockenschmiermittel, bevorzugt Molydänsulfid (MoS₂) und besonders bevorzugt Borsäure (H₃BO₃), auf.

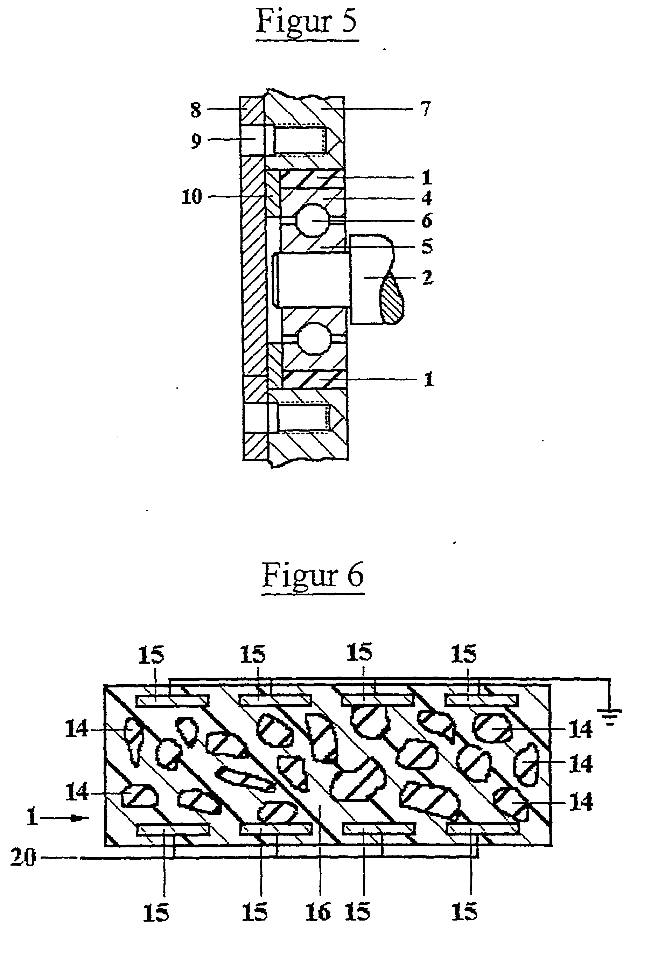

In Figur 5 ist eine Detailzeichnung eines stirnseitig in einem umgebenden Bauteil 7 gehalterten Drehteils 2 dargestellt. Das Wellenlager 3 ist am stirnseitigen Endbereich des Drehteils 2 angeordnet. Es entspricht der Bauweise des Wellenlagers 3 nach Figur 3, so daß auf das Wellenlager 3 nicht mehr genauer eingegangen wird. Im Bereich der Stirnseite des Drehteils 2 ist auf das Wellenlager 3 ein ringförmiger Konterring 10 angeordnet, der die Außenschale 4 und die Radialverstelleinheit 1 überdeckt. Der Konterring 10 liegt mit einer seiner beiden Radialflächen sowohl an der Radialverstelleinheit 1 als auch an der Außenschale 4 des Wellenlagers 3 berührend an. An der gegenüberliegenden Radialfläche des Konterrings 10 liegt an dem Konterring 10 eine Abschlußplatte 8 berührend an. Die Abschlußplatte 8 ist durch die Schrauben 9 mit dem umgebenden Bauteil 7 verschraubt. Durch diese Konstruktion ist die Radialverstelleinheit 1 und das Wellenlager 3 über den Konterring 10 gegen die Abschlußplatte 8 in axialer Richtung und damit auch gegenüber dem umgebenden Bauteil 7 abgestützt.

Anstelle der in den Figuren 1 bis 3 dargestellten Radialverstelleinheiten 1, die immer vollständig aus Piezoelementen gebildet sind, kann in besondere Weise auch als Dichtung ausgeführt sein, in der die Piezoelemente 14, 14', 14'' in einer Kunststoff-Matrix 16 angeordnet sind. Entsprechende Ausführungsbeispiele dieser (aktiven) Dichtungen sind in den Figuren 6 bis 8 dargestellt. Bei diesen Dichtungen ist von Vorteil, daß derartige Radialverstelleinheiten 1 neben der Dichtwirkung auch eine Schutzwirkung auf die Piezoelemente 14, 14', 14'' ausüben, die auf die sie umgebende Kunststoff-Matrix 16 der Dichtung zurückzuführen ist.

Figur 6 zeigt eine Dichtung einer Radialverstelleinheit 1 mit einer Matrix 16 aus vorzugsweise elektrisch leitendem Kunststoff, in den mehrere Piezoelemente 14 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandung der Dichtung sind günstigerweise elektrische Kontakte 15 angeordnet, die durch elektrische Steuerleitungen 20 mit einer Steuereinheit (nicht dargestellt) verbunden sind.

Durch die elektrischen Kontakte 15 können die einzelnen Piezoelemente 14 zum einen gezielt angesteuert werden und zum anderen ist es möglich, eine elektrische Spannung abzugreifen, die z.B. dadurch entstehen kann, das von einem Drehteil 2 übertragenen Schwingungen einen Drucks auf die Piezoelemente 14 ausüben und diese deformieren.

In einem einfachen Fall kann bei einer Dichtung auch auf die elektrischen Kontakte 15 verzichtet werden. In diesem Fall führt eine auf übertragene Schwingungen zurückgehende Deformation der Piezoelemente 14 zwar auch zu einer elektrischen Spannung. Die elektrische Spannung wird hier dann aber in eine Erwärmung der Kunststoff-Matrix 16 der Dichtung umgesetzt, womit das System ebenfalls gedämpft ist.

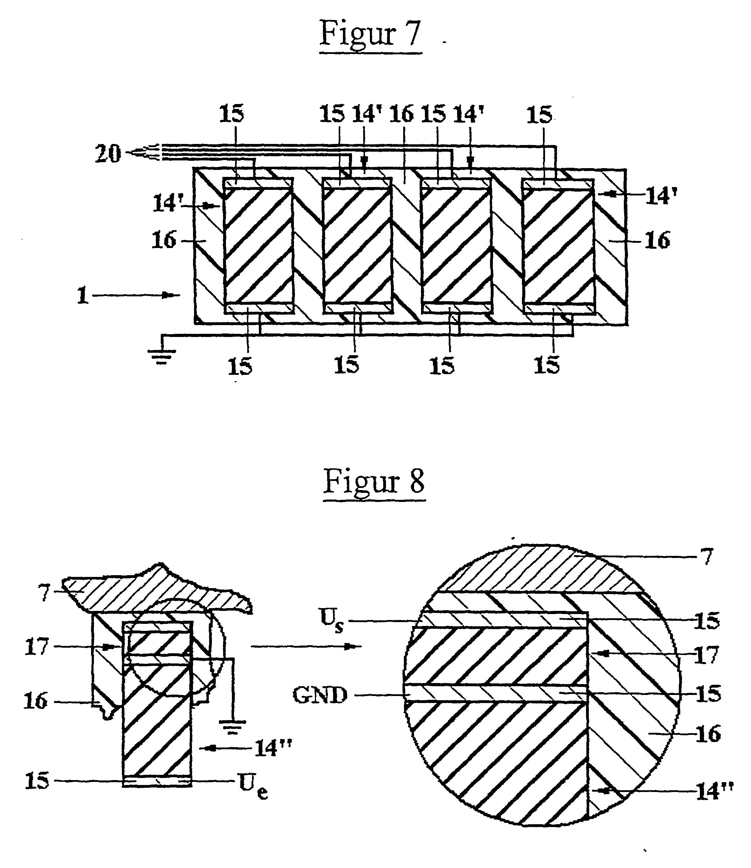

In Figur 7 ist eine weitere aktive Dichtung einer Radialverstelleinheit 1 mit einer Kunststoff-Matrix 16 dargestellt, in der mehrere Piezoelemente 14' eingebettet sind. Im Gegensatz zu dem Ausführungsbeispiel nach Figur 6 sind diese Piezoelemente 14' von bestimmter Größe und Form und zusätzlich orientiert angeordnet. Eine derartige Anordnung wird i.a. als 1-3-Piezokeramik-Polymer-Komposit bezeichnet.

Die einzelnen Piezoelemente 14' können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sein. Gegenüber der massiven Bauweise von Piezoelementen verringert sich bei den Multi-layer-Systemen bei gleicher Beanspruchung und gleicher aktiver Fläche - die Spannung, während sich die Strom erhöht.

Im Bereich der Wandung der Dichtung sind ebenfalls elektrische Kontakte 15 angeordnet, die gleichfalls durch elektrische Steuerleitungen 20 mit einer Steuereinheit (nicht dargestellt) verbunden sind. Im Unterschied zu der Dichtung nach Figur 6 ist bei der Dichtung nach Figur 7 ein jedes Piezoelement 14' einzeln elektrisch kontaktiert und somit auch getrennt einzeln ansteuerbar.

Über die elektrischen Kontakte 15 können die einzelnen Piezoelemente 14' gezielt zu Sekundär-Schwingungen mit gewünschten Frequenzen und Amplituden erregt werden. Die Sekundär-Schwingungen können mit den von dem Drehteil 2 her übertragenen Schwingungen interferiert und/oder diesen überlagert werden. Im Falle einer negativen Interferenz können die zuvor ohne diese Beeinflussung wahrgenommenen Geräusche zumindest verringert werden.

Die Piezoelemente 14' der Dichtung einer Radialverstelleinheit 1 sind vorzugsweise in der Art von Piezostaks ausgebildet und/oder lamellenartig und insbesondere fluchtend hintereinander in der Dichtung angeordnet.

Bei der Herstellung der Dichtung werden die so angeordneten Piezoelemente 14' sinnvollerweise vor dem Einlassen in den die Matrix 16 der Dichtung bildenden Kunststoff noch elektrisch kontaktiert. Damit die Dichtung einer Radialverstelleinheit 1 auch weiterhin ihren üblichen Zweck erfüllt, ist der die Matrix 16 bildende Kunststoff bevorzugt aus einem Polymer und insbesondere aus einem Elastomer gefertigt.

In Figur 8 ist eine aktive Dichtung einer Radialverstelleinheit 1 mit einer Kunststoff-Matrix 16 dargestellt, in der mehrere Piezoelemente 14'' mit zugeordneten piezoelektrischen Sensoren 17 eingebettet sind. Die Piezoelemente 14'' gleichen hinsichtlich der Bauart und der orientierten Anordnung weitgehend denen nach Figur 7.

Allerdings ist ihnen in Richtung ihrer aktiven Achse ein vorzugsweise piezoelektrischer Sensor 17 nachgeordnet. Der Sensor 17 weist einen gemeinsamen und einen zusätzlichen elektrischen Kontakt 15 auf. Der gemeinsame Kontakt 15, der zwischen dem Piezoelement 14'' und dem Sensor 17 angeordnet ist, ist zweckmäßigerweise geerdet bzw. auf ein elektrisches Null-Potential gelegt.

Über die elektrischen Kontakte 15 können die einzelnen Piezoelemente 14'' gezielt zu Sekundär-Schwingungen mit gewünschten Frequenzen und Amplituden erregt werden. Die Sekundär-Schwingungen können mit den von dem Drehteil 2 übertragenen Schwingungen interferiert und/oder diesen überlagert werden.

In vorteilhafter Weise kann bei einer derartigen Dichtung einer Radialverstelleinheit 1 mit dem Sensor 17 eine nach gewünschter Anregung der Piezoelemente 14'' verbleibende Restschwingung ermittelt und entsprechend gesteuert werden. Mit der zugehörigen Elektronik bildet also dieses Piezo-/Sensorelement 14'' einen Regelkreis aus. Aus diesem Grund ist es u.a. günstig, den Sensor 17 in Kraftflußrichtung und/oder parallel zu der Auslenkungsrichtung der zu erwartenden Amplitude bzw. der Moden der übertragenen Schwingung nach dem erregbaren Piezoelement 14'' anzuordnen.

Durch die einzelne elektrische Kontaktierung eines jeden Sensors 17 und der jeweiligen Piezoelemente 14'' kann der Ermittlung der Restschwingung und die Einleitung der Sekundär-Schwingung mit einer guten Auflösung und Flexibilität erfolgen.

## Patentansprüche

1. Verfahren zur Beeinflussung einer Geräuschkulisse einer Maschine, welche Geräuschkulisse zumindest von einem rotierenden Teil der Maschine ausgeht, insbesondere zur Beeinflussung der Geräuschkulisse innerhalb einer Fahrgastzelle eines Kraftfahrzeuges, bei welchem Verfahren die Amplituden und/oder die Frequenzen von Primär-Schwingungen, die die Geräuschkulisse bedingen, durch gezielte äußere Eingriffe verändert, vorzugsweise vermindert und/oder ergänzt, werden,
wobei die Einspannverhältnisse zwischen dem Wellenlager und einem drehbar in dem Wellenlager gehaltenen Drehteils, insbesondere einer Welle, der Maschine steuerbar verändert wird,
wobei durch die Veränderung der Einspannverhältnisse die zwischen Drehteil und dem Wellenlager bzw. einem das Wellenlager berührenden Bauteils vorliegende Übertragungsfunktion der Schwingungen, insbesondere der die Schallwellen erzeugenden Schwingungen, verändert wird, und
wobei zur Veränderung der Einspannverhältnisse die radiale Erstreckung einer ein piezoelektrisches Material aufweisenden Radialverstelleinheit reversibel verändert wird,
**dadurch gekennzeichnet,**
**dass** die die Veränderung der Übertragungsfunktion bewirkenden Piezoelemente (14, 14', 14") in einer Kunststoff-Matrix (6) einer Dichtung angeordnet werden und
**daß** im Bereich der Wandung der Dichtung elektrische Kontakte (15) angeordnet werden, die durch elektrische Steuerleitungen (20) mit einer Steuereinheit verbunden werden.

2. Verfahren nach Anspruch 1,
**dadurch gekennzeichnet,**
**daß** die Einspannverhältnisse in Abhängigkeit eines Parameters der Maschine, insbesondere der Drehzahl und/oder dem Kurbelwellenwinkel eines Verbrennungsmotors verändert wird.

3. Verfahren nach Anspruch 1,
**dadurch gekennzeichnet,**
**daß** die Daten zur Steuerung der Einspannverhältnisse einem in einem Datenspeicher niedergelegten Datensatz entnommen werden

4. Wellenlager zur Aufnahme eines innenseitig des Wellenlagers drehbar gehalterten Drehteiles, insbesondere einer Welle, wobei
die Rotationsachse des Drehteils achsgleich zur Rotationsachse des Lagers angeordnet ist, und mit einer Radialverstelleinheit zur Veränderung der Einspannverhältnissen des Drehteils in bzw. an dem Wellenlager,
wobei die Radialverstelleinheit ein piezoelektrisch aktives Material aufweist, und
wobei durch die Radialverstelleinheit die effektive radiale Erstreckung im Bereich des zu haltenden Drehteils und/oder der Anpreßdruck an das Drehteil zumindest zwischen zwei Maßen steuerbar reversibel veränderbar ist.
**dadurch gekennzeichnet,**
**dass** die die Veränderung der Übertragungsfunktion bewirkenden Piezoelemente (14, 14', 14'') in einer Kunststoff-Matrix (6) einer Dichtung angeordnet sind und
**daß** im Bereich der Wandung der Dichtung elektrische Kontakte (15) angeordnet sind, die durch elektrische Steuerleitungen (20) mit einer Steuereinheit verbunden sind.

5. Wellenlager nach Anspruch 4,
**dadurch gekennzeichnet,**
**daß** die Radialverstelleinheit (1) direkt an dem Außenumfang des Drehteils (2) angeordnet ist.

6. Wellenlager nach Anspruch 4,
**dadurch gekennzeichnet,**
**daß** die Radialverstelleinheit (1) an dem Außenumfang des Wellenlagers (3) angeordnet ist.

7. Wellenlager nach Anspruch 4,
**dadurch gekennzeichnet,**
**daß** die Radialverstelleinheit (1) als geteilte Schale ausgebildet ist.

8. Wellenlager nach Anspruch 4,
**dadurch gekennzeichnet,**
**daß** das Drehteil (2) ein rotierendes Systemteil, vorzugsweise eine Kurbelwelle oder eine Nockenwelle einer Brennkraftmaschine, insbesondere eines Diesel- oder Benzinmotors ist.

9. Wellenlager nach Anspruch 4,
**dadurch gekennzeichnet,**
**daß** das Drehteil (2) ein rotierendes Systemelement, vorzugsweise eine Welle bzw. ein Rotator eines Elektromotors ist.

10. Wellenlager nach Anspruch 4,
**dadurch gekennzeichnet,**
**daß** das Drehteil (2) ein rotierendes Systemelement eines Propellers oder einer Düsenantriebs ist.

## Claims

1. Method for influencing machine background noise, which background noise is emitted by at least one rotating part of the machine, in particular for influencing the background noise within a passenger compartment of a motor vehicle, in which method, the amplitudes and/or the frequencies of primary vibrations which cause the background noise are changed, preferably lessened and/or supplemented, by targeted external interventions, the mounting conditions between the shaft bearing and a rotating part rotatably held in the shaft bearing, in particular a shaft, of the machine being controllably changed, the transfer function of the vibrations, in particular of the vibrations producing the sound waves, which exists between the rotating part and the shaft bearing or a component contacting the shaft bearing being changed by the change in the mounting conditions, and the radial extension of a radial adjustment unit having a piezoelectric material being reversibly changed to change the mounting conditions, **characterised in that** the piezo elements (14, 14', 14") bringing about the change in the transfer function are arranged in a plastics material matrix (6) of a seal and **in that** arranged in the region of the wall of the seal are electric contacts (15) which are connected by electric control lines (20) to a control unit.

2. Method according to daim 1, **characterised in that** the mounting conditions are changed as a function of a parameter of the engine , in particular the rotational speed and/or the crankshaft angle of an internal-combustion engine.

3. Method according to daim 1, **characterised in that** the data for controlling the mounting conditions are taken from a data record filed in a data memory.

4. Shaft bearing for receiving a rotating part rotatably held inside the shaft bearing, in particular a shaft, the axis of rotation of the rotating part being arranged coaxially with the axis of rotation of the bearing, and comprising a radial adjustment unit for changing the mounting conditions of the rotating part in or on the shaft bearing, the radial adjustment unit having a piezoelectrically active material, and the effective radial extension in the region of the rotating part to be held and/or the contact pressure on the rotating part being controllably reversibly changeable by the radial adjustment unit at least between two measurements, **characterised in that** the piezo elements (14, 14', 14") bringing about the change in the transfer function are arranged in a plastics material matrix (6) of a seal and **in that** electric contacts (15), which are connected to a control unit by electric control lines (20), are arranged in the region of the wall of the seal.

5. Shaft bearing according to claim 4, **characterised in that** the radial adjustment unit (1) is arranged directly on the external periphery of the rotating part (2).

6. Shaft bearing according to claim 4, **characterised in that** the radial adjustment unit (1) is arranged on the outer periphery of the shaft bearing (3).

7. Shaft bearing according to claim 4, **characterised in that** the radial adjustment unit (1) is formed as a divided shell.

8. Shaft bearing according to claim 4, **characterised in that** the rotating part (2) is a rotating system part, preferably a crankshaft or a camshaft of an internal-combustion engine, in particular a diesel or petrol engine.

9. Shaft bearing according to claim 4, **characterised in that** the rotating part (2) is a rotating system element, preferably a shaft or a rotator of an electric motor.

10. Shaft bearing according to claim 4, **characterised in that** the rotating part (2) is a rotating system element of a propeller or a jet propulsion device.

## Revendications

1. Procédé destiné à influer sur le développement de bruit d'un moteur, lequel développement de bruit est généré au moins par une partie rotative du moteur, destiné en particulier à influer sur le développement de bruit à l'intérieur de l'habitacle d'un véhicule automobile, dans lequel procédé les amplitudes et/ou les fréquences des oscillations primaires, qui conditionnent le développement de bruit, sont modifiées, de préférence diminuées et/ou complétées, par des interventions ciblées extérieures,
les rapports de serrage entre le palier pour arbre et une pièce rotative du moteur, en particulier un arbre, montée rotative dans le palier, étant modifiés de manière commandée,
la modification des rapports de serrage entraînant la modification de la fonction de transmission des oscillations, en particulier des oscillations générant les ondes sonores, entre la pièce rotative et le palier pour arbre ou un élément en contact avec le palier pour arbre, et
la dimension radiale d'une unité de réglage radial, comportant un matériau piézoélectrique, étant modifiée de manière réversible pour modifier les rapports de serrage,
**caractérisé**
**en ce que** les éléments piézoélectriques (14, 14', 14"), provoquant la variation de la fonction de transmission, sont agencés dans une matrice en matière plastique (6) d'une garniture d'étanchéité, et
**en ce que** dans la zone de la paroi de la garniture d'étanchéité sont agencés des contacts électriques (15) qui sont reliés à une unité de commande par l'intermédiaire de lignes de commande (20) électriques.

2. Procédé selon la revendication 1, **caractérisé en ce que** les rapports de serrage sont modifiés en fonction d'un paramètre du moteur, en particulier la vitesse de rotation et/ou l'angle de vilebrequin d'un moteur à combustion interne.

3. Procédé selon la revendication 1, **caractérisé en ce que** les données destinées à commander les rapports de serrage sont prélevées dans un enregistrement de données stocké dans une mémoire de données.

4. Palier pour arbre destiné à recevoir une pièce rotative, en particulier un arbre, montée rotative du côté intérieur du palier pour arbre, l'axe de rotation de la pièce rotative étant agencé sur le même axe que l'axe de rotation du palier, et avec une unité de réglage radial destinée à modifier les rapports de serrage de la pièce rotative dans ou contre le palier pour arbre,
l'unité de réglage radial comportant un matériau piézoélectrique actif, et
la dimension radiale effective dans la zone de la pièce rotative à maintenir et/ou la pression d'appui contre la pièce rotative pouvant être modifiées par commande, de manière réversible, au moins entre deux valeurs, au moyen de l'unité de réglage radial,
**caractérisé**
**en ce que** les éléments piézoélectriques (14, 14', 14"), provoquant la variation de la fonction de transmission, sont agencés dans une matrice en matière plastique (6) d'une garniture d'étanchéité, et
**en ce que** dans la zone de la paroi de la garniture d'étanchéité sont agencés des contacts électriques (15) qui sont reliés à une unité de commande par l'intermédiaire de lignes de commande (20) électriques.

5. Palier pour arbre selon la revendication 4, **caractérisé en ce que** l'unité de réglage radial (1) est agencée directement contre le pourtour extérieur de la pièce rotative (2).

6. Palier pour arbre selon la revendication 4, **caractérisé en ce que** l'unité de réglage radial (1) est agencée contre le pourtour extérieur du palier pour arbre (3).

7. Palier pour arbre selon la revendication 4, **caractérisé en ce que** l'unité de réglage radial (1) est conçue sous forme de coque divisée.

8. Palier pour arbre selon la revendication 4, **caractérisé en ce que** la pièce rotative (2) est un élément d'un système rotatif, de préférence un vilebrequin ou un arbre à came d'un moteur à combustion interne, en particulier d'un moteur diesel ou d'un moteur à essence.

9. Palier pour arbre selon la revendication 4, **caractérisé en ce que** la pièce rotative (2) est un élément d'un système rotatif, de préférence un arbre ou un rotateur d'un moteur électrique.

10. Palier pour arbre selon la revendication 4, **caractérisé en ce que** la pièce rotative (2) est un élément d'un système rotatif d'une hélice ou d'un turboréacteur.
